(19) **Europäisches Patentamt / European Patent Office / Office européen des brevets**

(11) **EP 4 738 187 A1**

(12) **EUROPEAN PATENT APPLICATION**

(43) Date of publication:
06.05.2026 Bulletin 2026/19

(51) International Patent Classification (IPC):
**G06K 7/14** (2006.01)  **G06K 7/10** (2006.01)

(21) Application number: 25200091.4

(22) Date of filing: 04.09.2025

(52) Cooperative Patent Classification (CPC):
**G06K 7/1465; G06K 7/10752; G06K 7/146;**
G06K 7/10762

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 17.09.2024 US 202418888002

(71) Applicant: **Datalogic IP Tech S.r.l.**
**40012 Calderara di Reno (BO) (IT)**

(72) Inventors:
• **PERUGINI, Luca**
**40141 Bologna (BO) (IT)**
• **SPOLZINO, Simone**
**40058 San Lazzaro di Savena (BO) (IT)**
• **CANINI, Federico**
**40069 Zola Predosa (BO) (IT)**

(74) Representative: **Riccardi, Elisa et al**
**Barzanò & Zanardo S.p.A.**
**Via Borgonuovo, 10**
**20121 Milano (IT)**

(54) **MOTION VECTORS ANALYSIS FOR IMPROVING DECODING PERFORMANCE ON FAST-MOVING TARGETS BY CODE READERS**

(57) A code reader may be configured to use motion vectors to reduce blur of images when relative motion between the code reader and an object on which a code (e.g., machine-readable indicia, such as a barcode) is positioned. The motion vectors may used to calculate a frame quality factor (Q), which may enable the code reader to control components, such as an image sensor and/or illuminator. Using the quality factor, a decoder may be adjusted by replacing an image frame with a lower quality factor than one with a higher quality factor, which is more difficult to decode. The motion vectors may also enable the code reader to automatically determine that the code reader is being used to image a code so as to automatically transition from an idle phase to a decode phase.

FIG. 3

**Description**

**BACKGROUND**

Code readers are generally configured to be handheld, stationary, or a combination thereof. In the case of handheld code readers, a user typically moves the handheld code reader towards an object on which a machine-readable indicia (e.g., barcode, QR code, direct part marking (DPM) code, etc.) is disposed into a line-of-sight of reading optics of the code reader such that an image of the machine-readable indicia may be captured by an image sensor thereof. In the case of stationary code readers, a user or machine (e.g., conveyer) typically moves an object on which a machine-readable indicia is disposed into a line-of-sight of optics of the code reader such that an image of the machine-readable indicia may be captured by an image sensor thereof. In either case, motion of the object and machine-readable indicia relative to the code reader causes challenges for the code reader to properly image and decode the machine-readable indicia. As such, there is a need for improved performance of code readers when relative motion between a machine-readable indicial and code reader exists.

Code readers, especially stationary ones or ones that are in a standing mode, generally monitor a scene to determine whether motion within the scene occurs so as to become activated. Usually, the standing mode analyzes full images for changes, such as changes on features, brightness, or aiming pattern, or by using presence detection sensors, such as Time-of-Flight (ToF) sensors. The challenge with each of these techniques is cost and energy consumption. As such, there is a need for a technique for identifying motion of objects in a scene without having to be in an active mode or use of additional hardware that is costly for the hardware and integration thereof.

**SUMMARY**

To overcome the problems of existing code readers, the principles described herein provide for a system and methodologies for controlling components by optimizing configuration settings (e.g., image sensor, illuminator, decoder, etc.) of a code reader to reduce blur that would otherwise exist without controlling the components, thereby improving decoding performance of the machine-readable indicia by the code reader. A process may include using motion vectors to track moving objects and/or machine-readable indicia by moving between two image frames. Based on the motion vectors, parameters, such as gain and exposure time, used to control an image sensor may be adjusted. For example, if motion vectors are indicative of little or no relative movement between the code reader and object on which the machine-readable indicia is positioned, then the gain may be set low and exposure time may be set high to allow for high-quality imaging by the image sensor. If the motion vectors are indicative of high relative movement between the code reader and object on which the machine-readable indicia is positioned, then the gain may be set high and exposure time may be set low so as to capture an image of the machine-readable indicia in a short timeframe to reduce or eliminate blur. An illumination system control (e.g., flash) may also be configured to reduce blur generating optimized light pulses. These and other processes for controlling components of a code reader based on motion vectors may be utilized.

To overcome the problem of detecting objects with machine-readable indicia to be read by a code reader when in an idle or stationary mode, the use of an advanced image sensor with optical flow or motion vector generation may be utilized. The motion vectors may be used directly to determine the presence or absence of a target to decode in a scene (i.e., within a field-of-view of a code reader). The use of an image sensor with motion vector generation capabilities reduces hardware and system complexity with respect to external presence sensors and may be much faster in reaction time than analyzing a full frame on a host processor of the code reader. During an idle phase, the motion vectors may be the only data output from the image sensor, thereby reducing required bandwidth and processing time while potentially increasing frame rate of the image sensor.

One embodiment of a method of automatically configuring a code reader may include first imaging an object on which a machine-readable indicia is positioned to form a first image frame of the object. The object on which the machine-readable indicia is positioned may be second imaged to form a second image frame of the object. At least one motion vector of the object relative to the code reader between the first and second image frames may be determined. A frame quality factor (Q) of the second image frame based on the at least one motion vector may be calculated. A configuration of at least one of a decoder, image sensor, and illuminator may be automatically altered based on the calculated frame quality factor (Q). The machine-readable indicia may be decoded by the decoder.

One embodiment of a code reader may include an image sensor configured to capture images of a scene. A non-transitory memory may be configured to store captured images. An illuminator may be configured to illuminate the scene. At least one processor may be in communication with the image sensor and non-transitory memory, and be configured to first image an object on which a machine-readable indicia is positioned to form a first image frame of the object. The object on which the machine-readable indicia is positioned may be second imaged to form a second image frame of the object. At least one motion vector of the object relative to the code reader between the first and second image frames may be determined. A frame quality factor (Q) of the second image frame based on the at least one motion vector may be calculated. Configuration of at least one of a decoder being executed by the processor(s), image sensor, and the illuminator may be automatically altered based on the calculated frame quality factor (Q). The machine-readable indicia may be decoded by the decoder.

One embodiment of a code reader may include an image sensor configured to capture images of a scene. A non-transitory memory may be configured to store captured images. An illuminator may be configured to illuminate the scene. At least one processor may be in communication with the image sensor and non-transitory memory, and be configured to operate the code reader in an idle phase that (i) captures a first image of a scene within a field-of-view of the code reader by an image sensor, (ii) captures a second image of the scene within the field-of-view of the code reader by the image sensor, (iii) obtains at least one motion vector using the first and second images, the motion vector(s) may be indicative of motion of an object on which a machine-readable indicia is positioned, (iv) the motion vector(s) may be analyzed to determine motion of the object, (v) a determination may be made, based on the motion of the object, whether an object is present, and (vi) in response to determining that an object is not present, the motion vector(s) may continue to obtain otherwise, and in response to determining that the object is present, the code reader may be automatically transitioned from operating in the idle phase to operating in a decode phase to enable the code reader to decode the machine-readable indicia associated with the moving object.

## Brief Description of the Drawings

Illustrative embodiments of the present invention are described in detail below with reference to the attached drawing figures, which are incorporated by reference herein and wherein:

FIG. 1 is an illustration of an illustrative scene in which a handheld code reader may be used to image a machine-readable indicia disposed on an object;

FIG. 2 is an illustration of an illustrative scene in which a fixed position code reader may be used to image machine-readable indicia disposed on objects that are being moved past the code reader;

FIG. 3 is a flow diagram of an illustrative process for optimizing sensor parameters and frame dispatching onto a decoder (optionally formed of multiple decoders);

FIG. 4 is a block diagram of an illustrative code reader inclusive of hardware that is controlled by software for imaging machine-readable indicia with higher decoding accuracy when there is relative motion between the code reader and machine-readable indicia;

FIG. 5 is a graph of illustrative signals for use in controlling an illumination device of a code reader based on relative movement as represented by a determined motion blur (Q) between the code reader and an indicia positioned on an object;

FIGS. 6A and 6B, illustrations of a decoder formed of multiple instances or different individual decoders at times T1 and T2 during which (i) a new image frame is assigned to a decoder when there is an available decoder at time T1 and (ii) a new image frame is assigned when a motion blur of the new image frame is less than motion blur of an image frame current being decoded at time T2;

FIG. 7 is an illustration of a projection plot representative of an imaging system of a code reader with an imaging lens and two-dimensional (2D) image sensor to show how a three-dimensional (3D) motion vector of a moving object is projected on the 2D image sensor to form a 2D optical flow vector or motion vector;

FIG. 8 is a flowchart of an illustrative process executing on a code reader that enables the code reader to transition between an idle phase and a decode phase when objects are detected;

FIGS. 9A and 9B are illustrations of an illustrative object in which a region-of-interest is shown to be bounding the objects that are respectively (i) moving toward a code reader and (ii) moving away from the code reader;

FIG. 10 is an illustration of an illustrative object or target (e.g., package) on which a machine-readable indicia is disposed, and images with (i) motion vectors (dx,dy) diverging for the object decreasing in distance relative to a code reader and (ii) motion vectors (dx,dy) converging for the object increasing in distance relative to the code reader;

FIGS. 11A and 11B are illustrations of illustrative objects with identified respective border edges moving further (left) and closer (right) to a code reader or scanner simultaneously;

**FIG. 12** is an illustration of an illustrative scene in which examples of barcode bounding boxes entering a field-of-view (on the right) of a code reader along with one or more motion vectors associated with an object remaining inside the field-of-view, that for this reason are discarded (on the left);

**FIGS. 13A** and **13B** are illustrations of scenes of a code reader with illustrative laser cross-shaped aiming (AIM) patterns being reflected by a baseline background (left) (e.g., conveyer, tabletop, etc.) and by a presented object (right) (e.g., package, parcel, etc.), and motion vectors representing AIM pattern displacement (dotted lines for reference of image center); and

**FIGS. 14A-14C** are illustrations of illustrative scenes inclusive of a surface on or via which a background pattern is used for detection of an object at times t0, t1, and t2.

## DETAILED DESCRIPTION

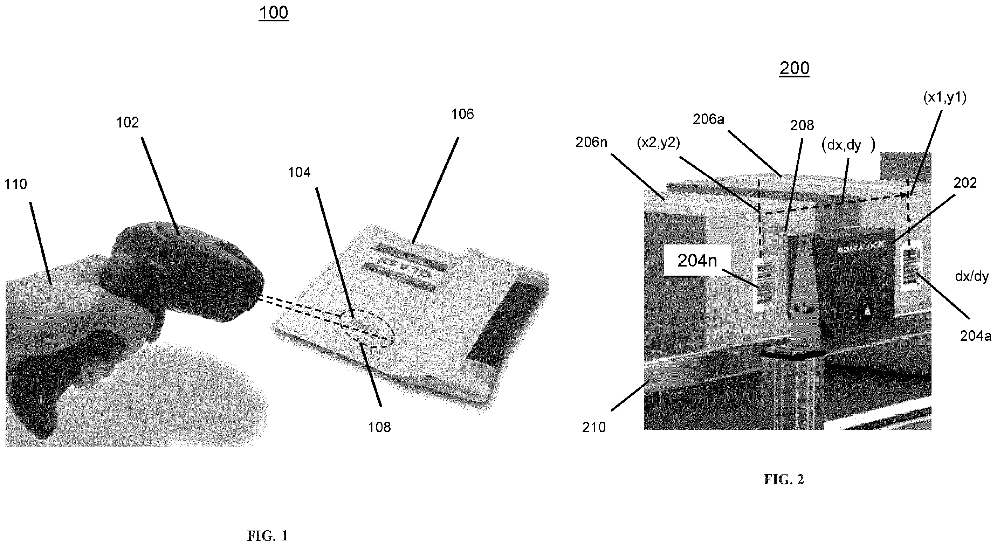

With regard to **FIG. 1,** an illustration of an illustrative scene **100** in which a handheld code reader **102** may be used to image a machine-readable indicia **104** disposed on an object **106,** in this case a parcel, is shown. The code reader **102** is shown to output and illumination signal **108** that defines a field-of-view (FOV) that encompasses the machine-readable indicia **104** to enable the code reader **102** to image the machine-readable indicia **104.** Because the code reader **102** is handheld, there is typically relative motion between the code reader **102** and the machine-readable indicia **104** caused by a user's hand **110** shaking or otherwise moving towards or across the machine-readable indicia **104,** for example. As described herein, effects of the relative motion between the code reader **102** and machine-readable indicia **104** disposed on the object **106** may be reduced or eliminated utilizing the principles described herein.

With regard to **FIG. 2,** an illustration of an illustrative scene **200** in which a fixed position code reader **202** may be used to image machine-readable indicia **204a-204n** (collectively **204**) disposed on respective objects **206a-206n** (collectively **206**) that are being moved past the code reader **202** is shown. The code reader **202** output and illumination signal **208** that defines a field-of-view of the code reader **202** within which the machine-readable indicia **204** may be read. The objects **204,** which in this case are packages being transported on a conveyor **210,** such as a conveyor belt, may pass through the illumination signal **208** of the code reader **202** such that the code reader **202** is able to image and decode the machine-readable indicia **204** affixed to the respective objects **206.** Because the objects **206** are moving relative to the code reader **202,** a speed, such as (dx, dy), may exist. In this case, the horizontal motion dx may be relatively constant due to being on a conveyor that moves at a constant speed, and the vertical motion dy may be zero or other small amount due to being moving on the horizontal conveyor **210.** As further described herein, effects of the relative motion between the code reader **202** and machine-readable indicia **204** disposed on the objects **206** may be reduced or eliminated utilizing the principles described herein.

Motion vectors are a way to understand how fast a scene is changing and to track moving objects inside a scene. Given a feature (e.g., an edge) moving between two frames, motion vector origins may have an origin of the feature in a first position in a first frame and point to the feature at a second position in the new frame. There are different ways in which motion vectors can be made available to the system, including (i) software or hardware accelerated calculation on the frames directly inside system processor or programmable logic, (ii) implemented directly inside an image sensor in hardware and provided to the host through the video interface (e.g., MIPI with or without dedicated channel), and (iii) using an event-based camera that is a camera that provides sparse information only for pixels that change in luminance above or below a configurable threshold, which enables aggregating pixels to define edges and tracking the edges to identify motion vectors using a host processor or dedicated hardware (ISPs).

In accordance with the principles described herein, motion vectors may be used to improve decoding performance by providing information on scene motion and configuring a decoder (optionally formed of multiple parallel decoders), image sensor, and illuminator, accordingly. By utilizing motion vectors to determine relative motion between a code reader and machine-readable indicia, it may be possible to identify handheld and other conditions without the use of an accelerometer in the code reader. Conversely, it may be possible to detect if there is a fast moving target relative to the code reader even if the code reader is in a fixed position, which would not be possible with an accelerometer. As such, the use of motion vectors enables determining if the target objects are moving, in which position and at which speed. The use of motion vectors may also enable determining if the target object is moving closer or farther relative to the code reader.

The use of the motion vectors may also be used to define which image frames have the greatest chance to be decodable by determining a quality of each frame based on the quantity of motion of the identified targets that may be of interest. Additionally, the use of the motion vectors may be used to change exposure and gain sensor priority based on motion present in a specific region-of-interest (ROI) related to barcode position (e.g., a ROI around aimer position or barcode boxes). The motion vectors may further be used to configure an illumination system to be more optimized for high motion tolerance (e.g., short illumination pulse) or high distance with lower motion tolerance (e.g., long illumination pulse). Still yet, the motion vectors may be used to determine if the target object is varying distance or if a different target comes into decoding area, so to adapt a system that relies on the assessment of the target distance for proper operation (e.g., re-measure distance), such as an autofocus system or a multi-camera/multi-focused system.

In particular, the principles described herein may improve barcode decoding by configuring the image sensor, illuminator, and frame dispatcher to one or more decoders based on a quantity of motion, which may be directly related to quality factor (Q), present in each of the image frames. The system may be configured to optimize use of the decoders by processing less blurred (low motion) image frames than more blurred (high motion) when all the decoders are processing by stopping processing of a decoder that is processing an image with a lower quantity of motion (i.e., less blur) than a decode processing an image with a higher quantity of motion (i.e., more blur). Moreover, if an image frame is determined to have a quantity of motion above a threshold, then decoding the image frame may be skipped completely.

In an embodiment, the system may be configured to cause an image sensor to lower gain when the reader and/or the target object are stationary (e.g., low relative motion between the code reader and target object) and to give priority to lower exposure when motion is high so as to improve motion tolerance when needed without increasing image noise (and therefore low light performance) when relative motion is low or stationary. Finally, changing illumination by selecting a short flash or long semicontinuous illumination can either freeze a high motion scene or provide more overall light to a low motion scene whenever additional light would improve imaging functionality. An example of a semicontinuous illumination scheme is described in U.S. Patent 10,817,685, issued October 27, 2020, entitled "System and method for illuminating a target of a barcode reader," the entire disclosure of which is incorporated herein by this reference.

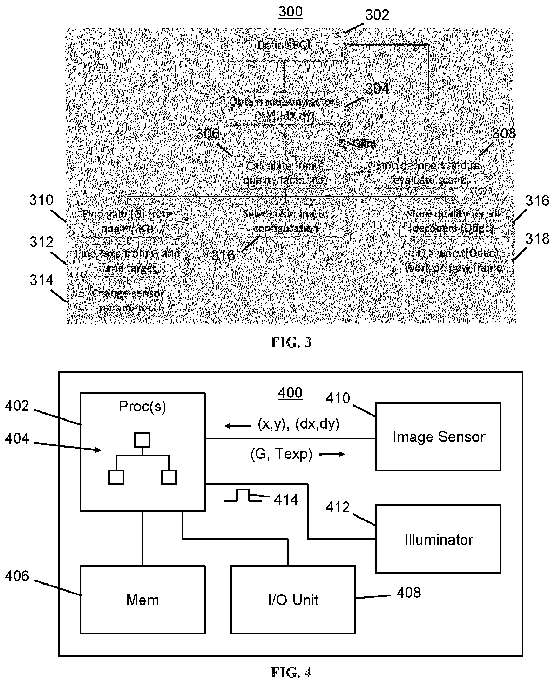

With regard to **FIG. 3,** a flow diagram of an illustrative process **300** for optimizing sensor and illuminator parameters and frame dispatching onto a decoder (optionally formed of multiple decoders) is shown. The process **300** may start at step **302** in which a region-of-interest (ROI) may be defined. The ROI may be an entire image or a sub-image. The ROI may be defined in any number of ways, such as identifying boundaries of a machine-readable indicia, identifying different color region, identifying a sequence of parallel lines, etc. At step 304, motion vectors may be obtained. In obtaining the motion vectors, data captured by an image sensor may be used to calculate the motion vectors or the image sensor may itself determine and output the motion vectors. Alternatively, an image processor that captures image data from the image sensor may calculate the motion vectors. The motion vectors may include position in two-dimensions (X,Y) and distance in two dimensions (dy,dy).

More specifically, motion vectors may be calculated using two time-related image frames. Some embodiments for calculating the motion vectors may include (i) find edges (or more general features) in a first image frame with configurable thresholds based on contrast change and size. Inside a region-of-interest around each edge, correlated edges in the second image frame may be identified. If a correlated edge is identified, a motion vector may be defined as: (X,Y) first image edge coordinate and origin of the vector, (dX,dY) distance between first and second image edge. The vectors may be calculated in different ways, but advanced sensors that calculate the vectors directly in hardware may improve system performance and reduce complexity of a processing system.

In an embodiment, a direct proportion exists between length of vectors and motion blur in an image captured in an image frame. At step **306,** the proportional relationship may be used to define or calculate a quality factor (Q) for each image. The quality factor (Q) may be used to define priority of sensor gain and to select best frame(s) for decoding.

One embodiment for calculating the quality factor (Q) of an image frame may include one or more steps. A region-of-interest related to barcode position inside the image frame may be defined. The region-of-interest may follow coordinates of an aimer signal or may be positioned to include barcode bounding boxes defined by localizers or pre-localizers. Limiting the region-of-interest to the barcode region may help removing effects of moving objects in the image frame that are not related to the barcode. Inside the region-of-interest, motion vectors related to the edges may be identified. Identifying the edges may be performed automatically utilizing advanced sensors that have a configurable region-of-interest for optical flow. In an embodiment, quality factor (Q) for the image frame related to motion blur may be defined as a sum of length of the motion vectors inside the region-of-interest.

$Q=sum(sqrt(dx^2+dy^2))$, where the lower the quality factor (Q), the less blur affects the image. Alternative computations may be utilized to calculate or otherwise determine the quality factor (Q) for each image frame.

In another embodiment, the region-of-interest is limited to the barcode region, and the calculated quality factor (Q) can be related to barcode information obtained from the code localizer, such as code pixel per element (ppe). It is then possible to link quality factor to barcode resolution to avoid discarding low resolution barcodes based only on absolute quality factor. This solution is trading speed for reliability.

A determination may be made after step 306 as to whether the calculated frame quality factor (Q) is greater than a quality factor threshold level (Qlim), which is indicative of too much blur existing in the image frame to enable decoding of a machine-readable indicia captured therein. In the case of very high image blur, which may be indicated by a very high Q, a scene change event may be triggered. Triggering a scene change event may indicate that (i) a user of a code reader has changed reader orientation to a new target, or (ii) that the target has moved away from the scene and all evaluations on the current image scene are no longer valid. In one embodiment, all decoders may be stopped from working on current frames to free resources for a new image scene. Additionally, in systems where periodic evaluations are present, such as autofocus systems that may need to recalculate distance, a new evaluation may be triggered during the scene change event before its scheduled time to react more quickly to a scene change so as to improve "snappiness." In addition to the quality factor (Q), motion vectors may be also analyzed to determine if a target object is moving closing or further from the scanner, as further described herein. Determining range of the target object may also be used to as part of detecting a scene change.

If the quality factor (Q) is determined to be greater than the quality factor threshold level, then at step **308,** one or more decoders may be stopped and the scene may be re-evaluated starting back at step **302.**

If the calculated frame quality factor (Q) is determined to be below the quality factor threshold level (Qlim), then the process may continue at step **310,** where gain (G) may be determined based on the quality factor (Q). In an embodiment, automatic exposure control (AEC) and/or automatic gain control (AGC) may be determined to be a priority based on the frame quality factor (Q). An AEC/ AGC algorithm may try to reach a target brightness in a region of the image by changing analog gain and exposure time in a first closed loop.

At step **312,** gain (G) and exposure time (Texp) may be determined. Many combinations of gain and exposure may reach the same brightness value (e.g., Texp=5ms and G=2, Texp=10ms and G=1, etc.). At step **314,** sensor parameters may be changed. In an embodiment, a second closed loop may be added to define a target quality factor Q and change gain (G) to reach the target quality factor (e.g., G = aQ). Exposure may then be selected to reach the target brightness level. In this way, (i) high motion scenes may have high gain and low exposure time (to reduce blur) and (ii) static scenes may have low gain and high exposure time (to reduce noise).

At step **316,** an illuminator configuration may be selected or otherwise determined and applied. In an embodiment, the illuminator may be regulated or controlled to output a short duration and high current flash pulse (in the case of a moving target, which helps freeze movement of the target and machine-readable indicia) or a long duration and low current, semicontinuous illumination, which is more energy efficient and provides for more overall light and less sensor noise for steady targets. A threshold, defined both in number of frames and quality factor value, may be used to create an hysteresis between sensor and illuminator parameters change to avoid flickering effects that are not desirable for the user. Changing sensor and illuminator parameters may also change quality factor results. In an embodiment, the system may wait for enough frames to settle and to change quality factor threshold value between pulsed and semicontinuous mode to avoid changing continuously even for constant scene conditions.

Captured image frames with optimized sensor parameters may then be sent to or otherwise applied to a decoder. A decoder is usually composed of multiple instances running in parallel on different cores. At step **316,** quality factors (Q) of captured image frames as assigned to individual decoders (or individual instances of a decoder) may be stored so as to be available to a frame dispatcher at step **318.** Sensor frame rate is usually higher than processing time of a decoder, especially for complex scenes, and not all image frames may be allocated to a free decoder. A frame dispatcher may be used to decide which image frames are the best candidates to be sent to the decoders. When each of the decoders are working on frames to decode a machine-readable indicia and a new image frame arrives, the quality factor $Q_n$ of the new image frame may be compared to each respective quality factor ($Q_i$) of respective image frames currently being decoded by the decoders by accessing the stored quality factors ($Q_s$). In an embodiment, a decoder working on an image frame with the worst quality factor (i.e., the highest Q) may be interrupted (e.g., stopped and cleared) to allow for the new image frame to be processed by the decoder that is interrupted. More specifically, if $Q_n >$ worst($Q_i$)+threshold because image frames with lower blur are easier to decode. In some embodiments, the described algorithm can be further optimized for speeding-up the calculation by adopting a "lighter" quantifier of the quantity of motion in a frame. For example, instead of defining Q=sum(sqrt(dx^2+dy^2)), a definition of Q=sum(dx^2+dy^2) may be utilized.

In summary, combining an optimized sensor configuration with the ability to interrupt a decoder that is decoding a machine-readable indicia with a high quality factor (i.e., high blurred frame) by a frame dispatcher and a dedicated configuration of an illuminator, the principles provided herein make it possible for decoder(s) to work on low blurred images without increasing noise when not necessary. These processes may be used together or individually depending on system specifications.

With regard to **FIG. 4,** a block diagram of an illustrative code reader **400** inclusive of hardware that is controlled by software for imaging machine-readable indicia with higher decoding accuracy when there is relative motion between the code reader and machine-readable indicia is shown. The code reader **400** (or other system in which a code reader is operating) may include one or more processors **402** that execute software **404** for performing the functionality as described in the process **300** of **FIG. 3.** The processor(s) **402** may be in communication with a non-transitory memory **406,** input/output unit **408,** image sensor **410,** and illuminator **412.** In being in communication, the processor(s) **402** may be directly or indirectly in communication, such as communicating to a controller of the image sensor **410** and illuminator **412,** for example. The software **404** may be configured to determine (e.g., receive from the image sensor **410**) or compute motion vectors, computing quality factors (Qs), executing decoders and the frame dispatcher, and manage the decoders, as previously described. In one embodiment, the image sensor **410** may be an advanced image sensor that is configured to automatically determine motion vectors, which may include stationary points (x,y) and distance vectors (dx,dy), and communicate motion vectors to the processor(s) **402** for processing thereby, as previously described with regard to **FIG. 3.** The memory **406** may be configured to store the quality factors (Qs) of the image frames being processed by the respective decoders, thereby enabling the frame dispatcher to stop and reassign image frames to the decoder with the worst quality factor (Q) in the event a new image frame with a better or lower quality factor (Q) is received (i.e., Qi < Q of a decoder). The software **404** may be configured to determine image sensor parameters (e.g., gain (G) and exposure time (Texp)), which may be communicated to the image sensor **410,** and illumination pulse duration of an illuminator control signal **414** for controlling the illuminator **412**. It should be understood that the illuminator control signal **414** may alternatively be a value that is used to set a controller (not shown) of the illuminator **412.**

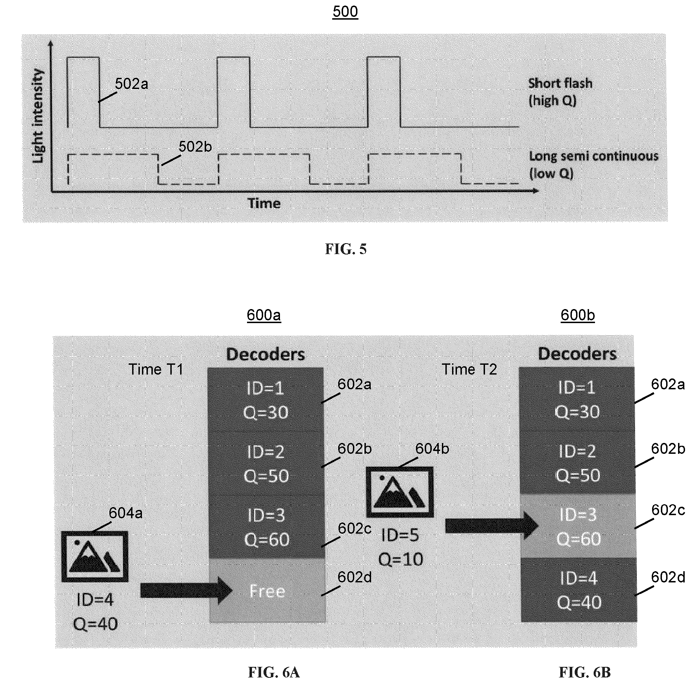

With regard to **FIG. 5,** a graph of illustrative signals **500** for use in controlling an illumination device of a code reader based on relative movement as represented by a determined motion blur or quality factor (Q) between the code reader and an indicia positioned on an object is shown. Two illumination signals **502a** and **502b** are shown, where illumination signal **502a** has short flashes with high light intensity due to determining that a high quality factor (Q) exists based on motion vectors being high, and illumination signal **502b** has long illumination times at lower light intensities due to determining that a low quality factor (Q) exists based on motion vectors being low. Each of the illumination signals **502a** and **502b** is able to help ensure that a decoder is able to properly decode a machine-readable indicia due to relative motion between a code reader and object on which the machine-readable indicia is disposed. It is noted that the frequency of illumination is the same, but that the illumination time and magnitude are different between the two illumination signals **502a** and **502b.**

With regard to **FIGS. 6A** and **6B,** illustrations of a decoder **600a** and **600b** formed of multiple instances or different individual decoders **602a-602d** (collectively decoders **602**) at times **T1** and **T2** during which (i) a new image frame **604a** is assigned to a decoder when there is an available decoder at time **T1** and (ii) a new image frame **604b** is assigned when a motion blur of the new image frame **604b** is less than motion blur of an image frame current being decoded are shown at time **T2**. As shown in **FIG. 6A,** the decoders **602a-602c** are shown to be processing (decoding) machine-readable indicia in image frames with respective identifiers and quality factors (ID=1, Q=30), (ID=2, Q=50), and (ID=3, Q=60), and decoder **602d** is free (i.e., not currently decoding a machine-readable indicia in an image frame). When the new image frame **604a** with (ID=4, Q=40), which is below a quality factor threshold level (Qlim), the new image frame **604a** is assigned to decoder **602d** for decoding a machine-readable indicia contained in the new image frame **604a.**

As shown in **FIG. 6B,** the decoders **602a-602d** are shown to be processing (decoding) machine-readable indicia in image frames with respective identifiers and quality factors (ID=1, Q=30), (ID=2, Q=50), (ID=3, Q=60), and (ID=4, Q=40). When the new image frame **604b** is received with (ID=5, Q=10), a frame dispatcher engine may be configured to (i) identify a decoder that is processing an image with the highest quality factor of the image frames being decoded and a quality factor (Q) higher than Q=10. In this case, decoder **602c** that is processing image frame (ID=3, Q=60) is identified. The frame dispatcher engine may then stop/replace the image frame (ID=3, Q=60) being processed by decoder **602c** with the new image frame **604b.** By replacing image frames being decoded with image frames with lower quality factors (Q) that have images of a machine-readable indicia that is more likely to be decoded due to having less blur, decoding machine-readable indicia are likely to be faster and have a higher likelihood of success. If the quality factor (Q) of a new image frame is higher than each of the image frames being processed by the decoders when all of the decoders are actively processing the image frames, then the new image frame may be discarded. In an embodiment, if a new image frame has a quality factor (Q) that is above a threshold value, then the image frame may be discarded to avoid risking a very long delay between arrival of the image frame and actual decoding.

**Machine-readable Indicia Reading Event Determination**

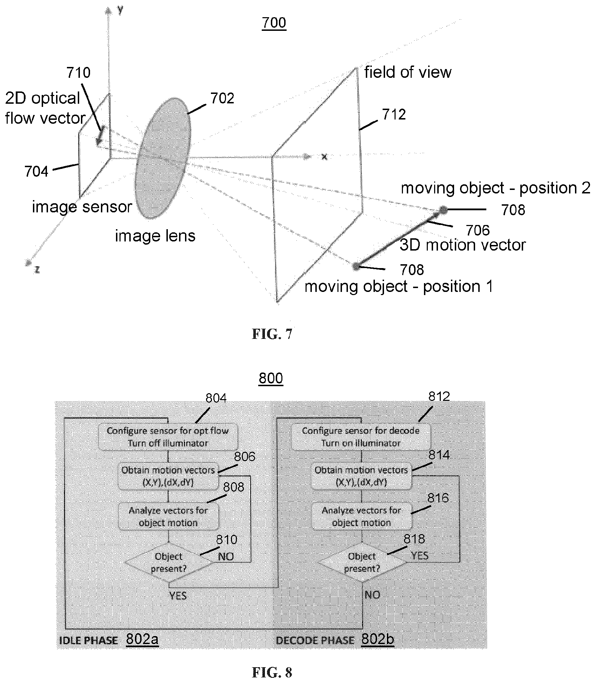

With regard to **FIG. 7,** an illustration of a projection plot **700** representative of an imaging system of a code reader with an imaging lens **702** and two-dimensional (2D) image sensor **704** to show how a three-dimensional (3D) motion vector **706** of a moving object **708** is projected on the 2D image sensor **704** to form a 2D optical flow vector or motion vector **710** is shown. The imaging lens **702** of the code reader defines a field-of-view **712** within which the moving object **708** is captured in image frames by the image sensor **704** moving from a first position to a second position, which results in the 3D motion vector **706** being formed by the code reader.

In general, motion vectors are a way to understand how fast a scene is changing and to track moving objects inside a scene defined by the field-of-view **712.** Given a feature (i.e., an edge) moving between two frames, motion vectors have an origin in a previous feature position (e.g., position 1) and point to a new feature position (e.g., position 2). The 2D image sensor **704** may be used for estimation of the 3D motion vector **706** in 3D space, so actually what is being detected is a projection of the 3D motion vector **706** on a 2D plane of the image sensor **704.** In this case, the term "2D optical flow vector" or motion vector **710** (as a generic term) may be used, representing such 3D to 2D projection that can be considered an approximation of the 3D motion vector **706** of the moving object **708** in the 3D space.

There are different ways in which estimation of the motion vector **710** may be made available to the code reader, including (i) software or hardware accelerated calculation on the frames directly inside system processor or programmable logic, (ii) implemented directly inside the image sensor **704** in hardware and provided to the host via a video interface (e.g., mobile industry processor interface (MIPI) with or without dedicated channel), (iii) using an event-based camera that provides asynchronously sparse information only for pixels that have changed in luminance above or below a configurable threshold, where the identified pixels may then be aggregated into edges and tracked to identify motion vectors using a host processor or dedicated hardware including one or more image signal processors (ISPs). It should be understood that the estimation of the motion vector **710** may be performed utilizing any other technique. However, the use of the hardware of the image sensor **704** to output the motion vector **710** (i.e., data representative of the motion vector **710**), may provide for reduced processing by processor(s) **402** of **FIG. 4** of the code reader.

In some specific applications, the code reader may operate in a stationary condition and machine-readable indicia are presented to the reader by a human operator. This operating mode is called a "presentation mode" and is characterized by a significant amount of motion. With regard to **FIG. 8,** a flowchart of an illustrative process **800** executing on a code reader that enables the code reader to transition between an idle phase **802a** and a decode phase **802b** (collectively phases **802**) when objects are detected is shown. In general, the code reader may use motion vectors as described with regard to **FIG. 7** to determine if an object with a machine-readable indicia disposed thereon is presented to the code reader operating in a stationary condition (e.g., positioned on a structure, resting on a counter, etc.). When operating in the presentation mode, the code reader is waiting for a machine-readable indicia disposed on an object to be presented and decoded. In an embodiment, the coder reader has two main phases, including the idle phase 802a and the decode phase **802b.**

In the idle phase **802a,** the code reader may be configured to analyze a scene with sensors, such as an image sensor, being active, but with illuminators in an OFF state. The sensor(s) in the idle phase **802a** may be used to determine if a machine-readable indicia is available for decoding. By maintaining the illuminators in an OFF state, the idle phase **802a** enables the code reader to operate with reduced power consumption. When the code reader starts in the idle phase **802a,** the illuminator is in the OFF state and sensor may be configured to provide only motion vectors through a video interface. In the idle phase **802a,** the code reader may wait for a machine-readable indicia to be viewable to start decoding. While waiting, a frame rate may be increased because optical flow data (representative of motion vectors) is much less than image data, thereby improving response time to activation events (e.g., identification of an object on which a machine-readable indicia is positioned). Optionally, calculation of a motion vector may be implemented on a selected region-of-interest of the image sensor so to restrict detection of a machine-readable indicia on an object presented to the scanner only to a specific application condition (e.g., only on a center of an image or only on a spatial band at a periphery of a field-of-view of the code reader). In the decode phase **802b,** the code reader, in response to detecting a machine-readable indicia, may cause one or more illuminators to transition to an ON state and be operated in a full power mode for decoding an imaged machine-readable indicia.

At step **806,** motion vectors may be acquired during the idle phase **802a.** The acquisition may be made by receiving image frames and calculating change in position of an imaged object from one frame to another (e.g., sequential image frames) or receiving the motion vectors from an advanced image sensor, for example. More specifically, the motion vectors may be acquired at step **806** and processed at step **808,** and information provided by the motion vectors may be used to determine at step **810** if switching to the decode phase **802b** is to be made in one or more ways, including:

1. Calculating a quality factor (Q) = sum(sqrt(dx^2+dy^2) proportional to motion in the scene. If quality factor (Q) is greater than a quality factor threshold level, an object (and machine-readable indicia) may be determined to be present at step **810** and the object may be added to a scene or image frame and the code reader may be switched to the decode phase **802b.**

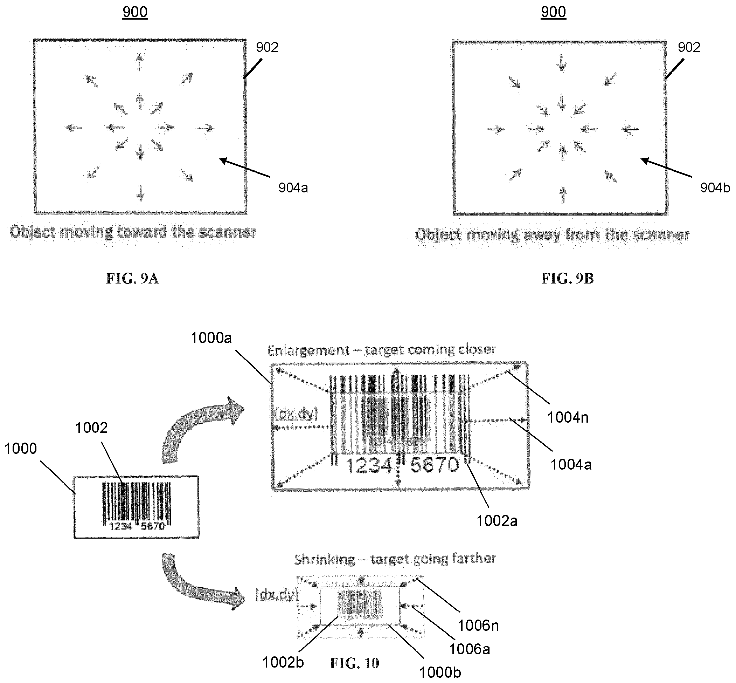

2. Analyzing vector position (x,y) to link a group of edges to specific objects or features in the scene. Vector direction (dx,dy) may then be used for each group of edges to determine if the object is closing in or moving further away based on convergence or divergence of motion vectors (see, for example, **FIG. 10**). If a determination is made that the object is getting closer at step **810,** the code reader may be transitioned to the decode phase **802b.**

3. Using pre-localizer information (if available) or other methods to define barcode bounding boxes for regions-of-interest. Motion vectors may be associated with bounding boxes to enable determination as to whether a machine-readable indicia (e.g., barcode) is entering or exiting the scene based on motion vector direction. If the machine-readable indicia is determined to be entering the scene at step **810,** then the code reader may enter the decode phase **802b.**

With further regard step **808,** the motion vectors may be analyzed to determine whether an object is detected as being in motion. The motion vectors may be used in different ways to determine if a machine-readable indicia or target is being presented to the code reader or not. At step **810,** a determination may be made as to whether an object is present. The analysis at step **810** may include (i) determining if a machine-readable indicia is being presented to the coder reader by assessing if something is moving in general by measuring a number and length of multiple motion vectors in a region-of-interest of the image to define a motion index or quality factor (Q). In an embodiment, if the quality factor (Q) is greater than a threshold level, a determination may be made that something is moving in the field-of-view and the code reader may be transitioned to the decode phase. Another technique for determining whether a machine-readable indicia is captured in an image may include (ii) defining edges that compose the same object and measuring if the edges are converging or diverging, which may indicate if the corresponding object is moving closer to or further from the code reader. If the object is moving closer to or moving further from the code reader, the code reader may be configured to enable or disable the code reader to be transitioned to the decode phase **802b.** If no object is detected, then the process **800** may return back to step **806,** where another set of motion vectors may be obtained.

Still yet, another technique for determining whether a machine-readable indicia is captured in an image may include (iii) using motion vectors in conjunction with pre-localizer information (that defines bounding boxes around areas that probably contain barcodes) to detect if barcodes are moving into or out of the field-of-view of the code reader. As further described herein, detecting exit conditions may allow the code reader to switch back to idle state **802a** even if moving objects are still present.

Using advanced image sensors with embedded hardware optical flow determination (i.e., generating motion vectors), allows for increasing the frame rate during the idle phase **802a,** and, therefore to respond more quickly to scene changes. The use of advance hardware image sensors further avoids using additional sensors, such as Time-of-Flight (ToF) sensors, that generally increase the overall product cost and complexity.

If a determination is made at step **810** that an object inclusive of a machine-readable indicia is present, the decode phase **802b** may be entered at step **812.** At step **812,** the code reader may reconfigure an image sensor to output image frames (with or without motion vectors), and transition an illumination device to be in an ON state. Thereafter, decoding by the code reader is enabled. During the decode phase **802b,** the code reader continues to obtain motion vectors at step **814** and analyze the motion vectors for object motion at step **816,** both of which may be performed in the same or similar manner as steps **806** and **808.** In an alternative embodiment, motion vectors may be disabled during the decode phase **802** and barcode decoding or timeout may be used to return to the idle phase. While in the decode phase **802,** a determination may be made at step **818** when the decode phase is no longer needed so as to switch back to the idle phase **802a** and reduce power consumption. At step **818,** there are different options for determining when an object is present, including (i) successfully decoding a machine-readable indicia (so decoding is not needed until a new code is presented in the idle phase **802a**), and (ii) if optical flow is still active and an object is still determined to be present at step **818,** the decoding phase **802b** cannot be stopped with a successful decoding, but depending on the results of steps **814** and **816,** the decode phase **802b** may be exited and a return to the idle phase **802a** at step **804** may occur. If a decode is successful, a light pulse, such as red light, white light, blue light, or otherwise, may be output for a user, thereby causing the object present condition of step **818** to cause the process **800** to transition the code reader back to the idle phase **802a** to turn the illuminator back to the OFF state so as to save energy.

With regard to **FIGS. 9A** and **9B,** illustrations of an illustrative object **900** in which a region-of-interest **902** is shown to be bounding the objects that are respectively (i) moving toward a code reader and (ii) moving away from the code reader are shown. Within the region-of-interest **902,** motion vectors **904a** and **904b** respectively indicate that the object **900** is moving towards the code reader and moving away from the code reader by pointing radially outward and inward. Because the respective motion vectors **904a** and **904b** have the same sizes and are radially facing inwards and outwards from a center of the object **900,** the object **900** and code reader are moving directly towards and away from one another. It should be understood that if a rotational angle between the object **900** and code reader existed (e.g., tilted left 30-degrees from normal), then at least some of motion vectors would have different lengths and/or directions. The ability to obtain the motion vectors **904a** and **904b** on a real-time or semi-real-time basis may be limited to the configuration of the code reader computational capabilities, such as one or more processors, image sensors, etc.

As previously described, the motion vectors **904a** and **904b** may be used to understand if the object **900** is moving closer or farther from the code reader, if the computing power of the processing platform supports such real-time identification and analyses. As shown in **FIG. 9A,** as the object **900** approaches the code reader or vice versa, the motion vectors **904a** diverge, which represents that the object is enlarging relative to the code reader, and when the object **900** increases distance, the motion vectors **904b** converge, which represents that the object is shrinking relative to the code reader.

It is easy to understand that all the components of the vectors, both in dx and in dy, may cancel out each other, so a good approximation may be processing vectors as follows: first, a score for central symmetry of movement vectors may be defined with x and y components, Cx, Cy, being separated:

Cx=sum(dxi) and Cy=sum(dyi), where i is an index of the dx and dy motion vector components.

For cases where there is significant presence of movement vectors (i.e., high motion), if Cx an Cy are approximately zero (a threshold can be defined), then the object **900** is varying its size relative to the code reader, which means the object **900** is varying in distance relative to the code reader.

At this point, if the leftmost motion vector has a dx component which is positive and the right most vector negative, then the motion vectors are converging so the image of the target is shrinking, which means that the object **900** is increasing in distance relative to the code reader. The same counts obviously for the Y-axis (upper/decreasing and lower/increasing motion vectors) and for the opposite case: diverging->enlarging->object **900** decreasing in distance relative to the code reader.

With regard to **FIG. 10,** an illustration of an illustrative object or target (e.g., package) **1000** on which a machine-readable indicia **1002** is disposed, and images **1002a** and **1002b** with (i) motion vectors (dx,dy) **1004a-1004n** (collectively **1004**) diverging for the object **1000** decreasing in distance relative to a code reader and (ii) motion vectors (dx,dy) **1006a-1006n** (collectively **1006**) converging for the object **1000** increasing in distance relative to the code reader is shown. That is, as a code reader is moved closer to the object **1000,** the machine-readable indicia **1002** increases in size, thus causing each of the motion vectors **1004** to radially lengthen (assuming the distance is decreased at a normal or perpendicular angle), and as the code reader is moved farther from the object **1000,** the machine-readable indicial **1002** decreases in size, thus causing each of the motion vectors **1006** to radially shorten (assuming the distance is increased at a normal or perpendicular angle). As previously described, if the relative angle between the object **1000** and code reader does not remain perpendicular (e.g., tip and/or tilt) as the distance between the two changes, the motion vectors **1004** or **1006** will change in size proportional to the relative angle changes.

One method for performing such evaluation may include calculating a barycenter of a starting or base point of the motion vectors **1004** or **1006,** where the coordinates of the starting points may be estimated, as $B(x,y) = (sum(x_i)/num(x), sum(y_i)/num(y))$

Thereafter, a comparison of the starting points of the motion vectors **1004** or **1006** with respect to the barycenter $(B(x) - x_i)$, and multiplying the comparison by the respective dx component and the same for y and dy, a new score may be defined that may help determine if the motion vectors **1004** and **1006** are converging or diverging, where the new score may be called Shrink Factor Sf (for x and for y), where:

$$Sf(x,y) = (Sum ( dxi * ( Bx - xi ) ) , Sum ( dyi * ( By - yi ) ) )$$

It should be understood that if the object is shrinking, then (xi*(Bx - xi ) will have a positive value (leftmost vector will have positive (Bx - xi) and positive dxi, while rightmost vectors will have both factors negative such that multiplying will lead to a positive result. Conversely, an object enlarging (diverging vectors) will have a negative Sf.

The shrink factor absolute value is also an estimation of how much the object is shrinking/enlarging and also how much the object **1000** is also varying in distance relative to the code reader. Shrink factor Sf may also be normalized so that object of different sizes may have similar shrink factor Sf values in parity of variation of distance:

$$Sfn(x,y) = ( Sf(x) / sum | Bx - xi | , Sf(y) / sum | By - yi | )$$

This new information is indicative of the target distance variation and can be calculated in parallel with the evaluation of quality factor (Q), then integrated in the processing algorithm described previously.

Of course, this is an approximation, since the object **1000** may be varying in distance relative to the code reader, but may also vary position or skew / pitch/ roll with respect to the center of the image affecting the value of shrink factors Sf and Sfn, which works best with objects or targets being in the central part of the image of the code reader. Still this is a simple and significant score for providing an estimation of how the object **1000** is changing in distance and may be effectively used by setting proper thresholds for discriminating the cases of interest without the need for a precise distance measurement.

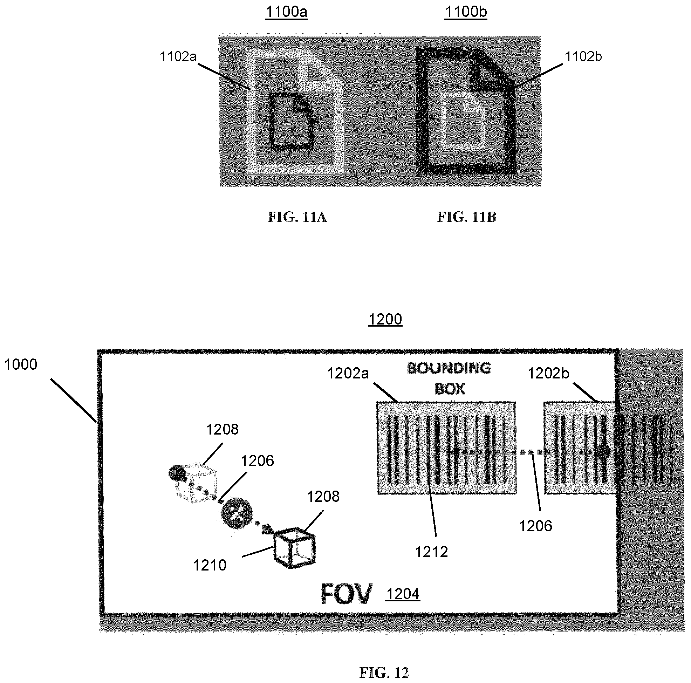

With regard to **FIGS. 11A** and **11B,** illustrations of illustrative objects **1100a** and **1100b** with identified respective border edges **1102a** and **1102b** (collectively **1102**) moving further (left) and closer (right) to a code reader or scanner simultaneously are shown. With more complex algorithms, it may be possible to determine if the edges **1102** related to the motion vectors are part of the same object by simply correlating the starting position of the motion vectors and their direction and distance, and motion vectors with very similar dx and dy components and adjacent one another may be determined to be most likely part of the same object. Thereafter, the object borders **1102** may be identified and so the motion vectors may be associated to each of the object edges, thereby also making it possible to simultaneously identify if there are two moving objects with different directions and allowing for a more accurate identification.

With regard to **FIG. 12,** an illustration of an illustrative scene **1200** in which examples of barcode bounding boxes **1202a** and **1202b** (collectively **1202**) entering a field-of-view **1204** (on the right) of a code reader along with one or more motion vectors **1206** associated with an object **1208** remaining inside the field-of-view **1202,** that for this reason are discarded (on the left) is shown. Evaluation of the target position inside/outside the field-of-view **1202** may be performed to identify borders and/or edges **1210** of the object **1208.** Once the border/edges **1210** of the object **1208** are identified, it is also possible to understand if the object **1208** is moving and staying inside the field-of-view **1202** or if the object is going outside/coming inside the field-of-view **1202,** independently from an evaluation of distance variation of the object **1208,** as previously described.

If barcode pre-localizer information, or other methods to define the barcode bounding boxes 1202 are available, then it is possible to determine even more accurately if a machine-readable indicia (e.g., barcode) **1212** is entering or exiting the scene **1200** based on the direction of the motion vectors **1206** present inside the bounding box **1202a,** while ignoring the movement of other objects not containing barcodes.

If the identified barcode **1212** of the object **1208** is entering the scene **1200,** the scanner may enter a decode phase **(FIG. 8),** and if the object **1208** with the barcode **1212** is exiting the scene **1200,** the code reader may enter an idle mode (see **FIG. 8**). A different behavior may instead be associated to an object that is moving inside the field-of-view **1202** without exiting the scene **1200.** For example, no mode variation or change may be issued since the movement is not relevant and so to avoid unnecessary and undesirable fast switching between the idle and decode phases or modes (see **FIG. 8**).

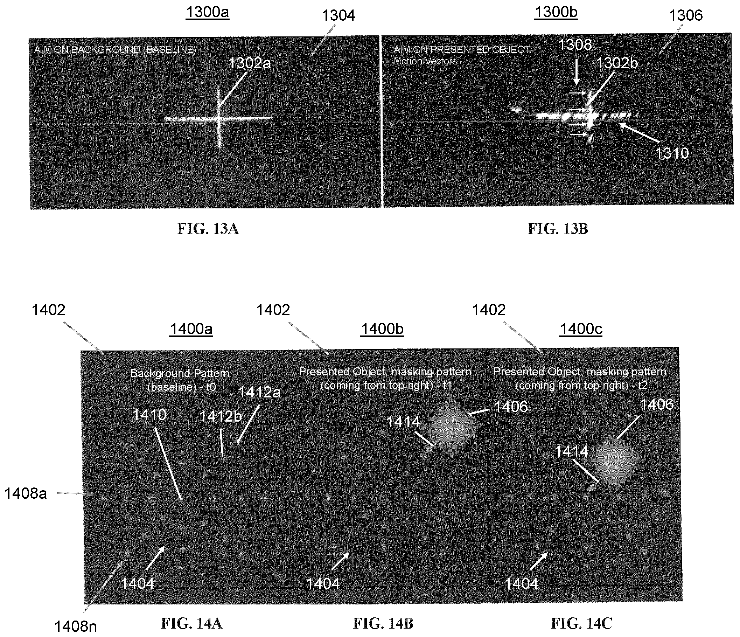

With regard to **FIGS. 13A** and **13B,** illustrations of scenes **1300a** and **1300b (1300)** of a code reader with illustrative laser cross-shaped aiming (AIM) patterns **1302a** and **1302b** (collectively **1302**) being reflected by a baseline background (left) (e.g., conveyer, tabletop, etc.) **1304** and by a presented object (right) (e.g., package, parcel, etc.) **1306,** and motion vectors **1308** representing AIM pattern displacement (dotted lines for reference of image center) are shown. In an embodiment, detection of the object **1306** using AIM pattern displacement may be utilized. In some cases, such as when there is low ambient light, motion vectors may be difficult to extract because of the poor visibility of the moving object. In such cases, the AIM pattern **1302a** (if present in the system) might be turned to an ON state and acquired in the image captured by the code reader. By doing so, the object **1306** entering the region-of-interest reflects the AIM pattern **1302b** to enable the image sensor of the code reader to capture displacement or reflection of the AIM pattern **1302b** with respect to the baseline background **1304** that is captured during an idle phase **802a** of **FIG. 8,** where the AIM pattern **1302a** is reflected by the background since no objects and/or machine-readable indicia are identified in an image frame. In this way, "virtual" motion vectors **1308** representing the AIM pattern displacement might be generated and trigger the system to switch to the decode phase **802b.**

With regard to **FIGS. 14A-14C,** illustrations of illustrative scenes **1400a, 1400b,** and **1400c** (collectively **1400**) inclusive of a surface **1402** on or via which a background pattern **1404** is used for detection of an object **1402** at times **t0, t1,** and **t2** are shown. The background pattern **1404** may be formed by stickers, paint, backlit translucent or transparent regions defined by the surface, or any other means having a different color than a color of the surface **1402.** The background pattern **1404** forms a distinguishing pattern that enables a processor of a code reader or other device to determine presence of an object **1406** moving in front of the background pattern **1404** so as to mask one or more features of the background pattern **1404.** As shown, the background pattern **1404** may be formed of a number of dots arranged in lines **1408a-1408n** (collectively **1408**) that extend radially and symmetrically from a center point **1410.** It should be understood that alternative feature shapes (e.g., squiggles, diamonds, squares, etc.) and arrangements thereof may be utilized in accordance with the principles described herein. The background pattern in any shape or configuration may be used to enable identification of an object being disposed between the background pattern **1404** and an image sensor of a code reader that may be fixedly disposed vertically above the surface **1402.** Handheld code readers or other orientation of the surface and code reader may alternatively be utilized. Background pattern masking techniques for identification of an object may be utilized where a object motion vectors are difficult to extract. In general, background pattern making techniques may be used in order to aid object detection by providing a steady and always present background pattern, thereby making object detection easier during an idle phase (see **FIG. 8**). The background pattern **1404,** or any other configuration thereof, should be arranged in such a manner that any presented object at least in part covers the background pattern **1404.**

In operation, as the object **1406** enters into the scene **1400b** at time **t1** and covers a dot **1412a** as viewable by the image sensor of the code reader, a determination may be made that the object is being presented to the code reader by the idle process **802a** of **FIG. 8.** Because of the arrangement of the background pattern **1404,** the object **1406** is determined to be presented from the top right of the scene **1400b** and in scene **1404c** at time **t2,** the object is determined to be moving towards the center point **1410** (as indicated by a direction arrow **1414**) and in the center of the field-of-view of the code reader based on the object **1406** covering the point **1412b** in the scene **1400c** at time **t2.** Using the background pattern mask **1404,** it may be possible to detect a presented object by assessing the features of the pattern being masked (e.g., one or more features of the background pattern). In this case, the motion vectors (not shown) are "virtual" in the sense that the motion vectors may track the missing background features (e.g., dots) of the background pattern **1404** being masked by the foreground presented object - in a way appearing as if they are moving to the next not-yet-masked feature in the same direction from which the object is coming.

**Embodiments**

One embodiment of a method of automatically configuring a code reader may include first imaging an object on which a machine-readable indicia is positioned to form a first image frame of the object. The object on which the machine-readable indicia is positioned may be second imaged to form a second image frame of the object. At least one motion vector of the object relative to the code reader between the first and second image frames may be determined. A frame quality factor (Q) of the second image frame may be calculated based on the at least one motion vector. Configuration of at least one of a decoder, image sensor, and illuminator based on the calculated frame quality factor (Q) may be automatically altered. The machine-readable indicia may be decoded by the decoder.

Automatically altering configuration of the sensor may include calculating gain (G) and exposure time (Texp) to reach a brightness level of the machine-readable indicia. Calculating gain (G) and exposure time (Texp) may include executing automatic exposure control (AEC) and automatic gain control (AGC) functions. Automatically altering configuration of the image sensor may include calculating gain (G) and defining a target frame quality factor (Q) to reach the target quality factor, and then determining exposure to reach the target brightness level. Automatically altering configuration of the illuminator may include automatically selecting an illumination configuration based on the calculated frame quality factor (Q), the illumination configuration including (i) a first output duration of the illuminator if the calculated frame quality factor (Q) is at a first level and (ii) a second output duration of the illuminator that is longer than the first output duration if the calculated frame quality factor (Q) is at a second level below the first level. In some embodiments, the illumination configuration may be modulated to increase or decrease the illumination intensity based on the calculated frame quality factor (Q).

Automatically altering configuration of the decoder may include (i) storing the frame quality factor (Q) for each machine-readable indicia being decoded by the decoder, (ii) determining whether the frame quality factor (Q) of the second image frame is lower than any other frame quality factor of any other image frame being decoded by the decoder, the decoder being formed of multiple decoders configured to decode machine-readable indicia captured in respective image frames, and (iii) in response to determining that the frame quality factor is lower than at least one other frame quality factor, replacing an image frame currently being decoded by the decoder with the highest frame quality factor (Q) with the second image frame. The process may further include defining a region-of-interest (ROI) related to the machine-readable indicia, and where determining at least one motion vector may include determining at least one motion vector within the region-of-interest.

The process may further include determining whether the calculated frame quality factor (Q) crosses a frame factor threshold level. In response to determining that the frame quality factor (Q) crosses the frame quality factor threshold level, the decoder may be stopped. Otherwise, if the frame quality factor (Q) is determined to not have crossed the frame quality factor threshold level, the machine-readable indicia may be continued to be decoded by the decoder. Determining at least one motion vector may include determining at least one motion vector in a two-dimensional (2D) coordinate system. Determining at least one motion vector may include receiving an output from an image sensor used for performing the first and second imaging.

Automatically altering configuration of the illuminator may include automatically transitioning the illuminator from an OFF state to an ON state in response to determining that the object is present. The process may further include, in response to determining that the object is no longer present, the illuminator may be automatically transitioned from the ON state back into the OFF state.

One embodiment of a code reader may include an image sensor configured to capture images of a scene. A non-transitory memory may be configured to store captured images. An illuminator may be configured to illuminate the scene. At least one processor may be in communication with the image sensor and non-transitory memory and optionally the illuminator, and be configured to first image an object on which a machine-readable indicia is positioned to form a first image frame of the object. The object on which the machine-readable indicia is positioned may be second imaged to form a second image frame of the object. At least one motion vector of the object relative to the code reader between the first and second image frames may be determined. A frame quality factor (Q) of the second image frame based on the at least one motion vector may be calculated. Configuration of at least one of a decoder being executed by the processor(s), image sensor, and the illuminator may be automatically altered based on the calculated frame quality factor (Q). The machine-readable indicia may be decoded by the decoder.

Automatically altering configuration of the sensor may include calculating gain (G) and exposure time (Texp) to reach a brightness level of the machine-readable indicia. Calculating gain (G) and exposure time (Texp) may include executing automatic exposure control (AEC) and automatic gain control (AGC) functions. Automatically altering configuration of the image sensor may include calculating gain (G) and defining a target frame quality factor (Q) to reach the target quality factor, and then determining exposure to reach the target brightness level. Automatically altering configuration of the illuminator may include automatically selecting an illumination configuration based on the calculated frame quality factor (Q), the illumination configuration may include (i) a first output duration of the illuminator if the calculated frame quality factor (Q) is at a first level and (ii) a second output duration of the illuminator that is longer than the first output duration if the calculated frame quality factor (Q) is at a second level below the first level. In some embodiments, the illumination configuration may be modulated to increase or decrease the illumination intensity based on the calculated frame quality factor (Q). In some embodiments, in automatically altering configuration of the illuminator, the at least one processor may be configured to automatically modulate an illumination intensity based on the calculated frame quality factor (Q).

Automatically altering configuration of the decoder may include (i) storing the frame quality factor (Q) for each machine-readable indicia being decoded by the decoder, (ii) determining whether the frame quality factor (Q) of the second image frame is lower than any other frame quality factor of any other image frame being decoded by the decoder, the decoder being formed of multiple decoders configured to decode machine-readable indicia captured in respective image frames, and (iii) in response to determining that the frame quality factor is lower than at least one other frame quality factor, replacing an image frame currently being decoded by the decoder with the highest frame quality factor (Q) with the second image frame.

The processor(s) may further be configured to define a region-of-interest (ROI) related to the machine-readable indicia, and determine at least one motion vector within the region-of-interest. The processor(s) may further be configured to determine whether the calculated frame quality factor (Q) crosses a frame factor threshold level. In response to determining that the frame quality factor (Q) crosses the frame quality factor threshold level, the decoder may be stopped. Otherwise, if the frame quality factor (Q) is determined to not have crossed the frame quality factor threshold level, the machine-readable indicia may continue to be decoded by the decoder. The processor(s), in determining at least one motion vector, may be configured to determine at least one motion vector in a two-dimensional (2D) coordinate system.

The processor(s), in determining at least one motion vector, may be configured to receive an output from an image sensor used for performing the first and second imaging. The processor(s), in determining at least one motion vector, may be configured to receive an output inclusive of the at least one motion vector calculated by an image sensor used for performing the first and second imaging. The processor(s), in automatically altering configuration of the illuminator, may be configured to automatically transition the illuminator from an OFF state to an ON state in response to determining that the object is present. The processor(s) may further be configured to, in response to determining that the object is no longer present, automatically transition the illuminator from the ON state back into the OFF state.

One embodiment of a method of operating a code reader may include operating the code reader in an idle phase by (i) capturing a first image of a scene within a field-of-view of the code reader by an image sensor, (ii) capturing a second image of the scene within the field-of-view of the code reader by the image sensor, (iii) obtaining at least one motion vector using the first and second images, the at least one motion vector being indicative of motion of an object on which a machine-readable indicia is positioned, (iv) analyzing the at least one motion vector to determine motion of the object, (v) determining, based on the motion of the object, whether an object is present, (vi) in response to determining that an object is not present, continue obtaining the at least one motion vector, otherwise, in response to determining that the object is present, automatically transitioning the code reader from operating in the idle phase to operating in a decode phase to enable the code reader to decode the machine-readable indicia associated with the moving object.

Operating the code reader in the idle phase may further include maintaining an illuminator in an OFF state or transitioning the illuminator from an ON state to an OFF state. Obtaining at least one vector may include receiving the at least one motion vector output by the image sensor configured to generate motion vectors based on movement of the object between a first image frame and a second image frame.

Operating in a decode phase may include (i) turning the illuminator to an ON state from the OFF state, (ii) capturing a third image by the image sensor, (iii) capturing a fourth image by the image sensor, (iv) obtaining at least one second motion vector indicative of movement of the object, analyzing the at least one second motion vector to determine second motion of the object, (v) determining, based on the second motion of the object, whether the object is present, and (vi) in response to determining that the object is present, continue obtaining second motion vectors until the object is determined not to be present, otherwise, in response to determining that the object is no longer present, automatically transitioning the code reader back to the idle phase including transitioning the illuminator from the ON state to the OFF state.

The process may further include decoding the machine-readable indicia captured in at least one of the third or fourth images. A determination that the code reader is moving towards or away from the object may be made if multiple motion vectors or multiple second motion vectors are respectively extending radially outward or radially inward from a center point of the object captured in the first and second images and/or third and fourth images the object.

In response to determining that the object is moving away from the object while operating in the decode phase, the code reader may be automatically transitioned back to the idle phase including transitioning the illuminator from the ON state to the OFF state. In response to determining that the object is moving towards the object while operating in the idle phase, the code reader may be automatically transitioned from operating in the idle phase to operating in a decode phase to enable the code reader to decode the machine-readable indicia associated with the moving object.

A frame quality factor (Q) may be determined based on the at least one second motion vector. The object may be illuminated with an aiming pattern, and the motion vector(s) may be generated based on the first and second images captured by the image sensor. Capturing the first image may include capturing a first portion of a background pattern at a surface on which the object is positioned as a result of the object being positioned between the background pattern and code reader. Capturing the second image may include capturing a second portion of the background pattern as a result of the object being positioned between the background pattern and code reader. The motion vector(s) may be determined based on the captured first and second portions of the background pattern.

One embodiment of a code reader may include an image sensor configured to capture images of a scene. A non-transitory memory may be configured to store captured images. An illuminator may be configured to illuminate the scene. At least one processor may be in communication with the image sensor and non-transitory memory and optionally the illuminator, and be configured to operate the code reader in an idle phase that (i) captures a first image of a scene within a field-of-view of the code reader by an image sensor, (ii) captures a second image of the scene within the field-of-view of the code reader by the image sensor, (iii) obtains at least one motion vector using the first and second images, the motion vector(s) may be indicative of motion of an object on which a machine-readable indicia is positioned, (iv) the motion vector(s) may be analyzed to determine motion of the object, (v) a determination may be made, based on the motion of the object, whether an object is present, and (vi) in response to determining that an object is not present, the motion vector(s) may continue to be obtained; otherwise, and in response to determining that the object is present, the code reader may be automatically transitioned from operating in the idle phase to operating in a decode phase to enable the code reader to decode the machine-readable indicia associated with the moving object.

The processor(s), in operating the code reader in the idle phase, may further be configured to maintain the illuminator in an OFF state or transitioning the illuminator from an ON state to an OFF state. The processor(s), in obtaining at least one vector, may be configured to receive the at least one motion vector output by the image sensor configured to generate motion vectors based on movement of the object between a first image frame and a second image frame.

The processor(s), in operating in a decode phase, may be configured to (i) turn the illuminator to an ON state from the OFF state, (ii) capture a third image by the image sensor, (iii) capture a fourth image by the image sensor, (iv) obtain at least one second motion vector indicative of movement of the object, (v) analyze the at least one second motion vector to determine second motion of the object, (vi) determine, based on the second motion of the object, whether the object is present, and (vii) in response to determining that the object is present, continue to obtain second motion vectors until the object is determined not to be present, otherwise, in response to determining that the object is no longer present, automatically transition the code reader back to the idle phase including transition the illuminator from the ON state to the OFF state.

The processor(s) may further be configured to decode the machine-readable indicia captured in at least one of the third or fourth images. A determination that the code reader is moving towards or away from the object if multiple motion vectors or multiple second motion vectors are respectively extending radially outward or radially inward from a center point of the object captured in the first and second images and/or third and fourth images the object.

In response to determining that the object is moving away from the object while operating in the decode phase, the processor(s) may be configured to automatically transition the code reader back to the idle phase including transitioning the illuminator from the ON state to the OFF state. In response to determining that the object is moving towards the object while operating in the idle phase, the processor(s) may further be configured to automatically transition the code reader from operating in the idle phase to operating in a decode phase to enable the code reader to decode the machine-readable indicia associated with the moving object. A determination of a frame quality factor (Q) may be made based on the second motion vector(s).

The code reader may further include an aiming pattern illuminator. The processor(s) may further be configured to cause the aiming pattern illuminator to illuminate the object with an aiming pattern, and generate the motion vector(s) based on the first and second images captured by the image sensor.

In capturing the first image, the processor(s) may further be configured to capture a first portion of a background pattern at a surface on which the object is positioned as a result of the object being positioned between the background pattern and code reader. In capturing the second image, a second portion of the background pattern may be captured as a result of the object being positioned between the background pattern and code reader. The one motion vector(s) may be determined based on the captured first and second portions of the background pattern.

The foregoing method descriptions and the process flow diagrams are provided merely as illustrative examples and are not intended to require or imply that the steps of the various embodiments must be performed in the order presented. As will be appreciated by one of skill in the art, the steps in the foregoing embodiments may be performed in any order. Words such as "then," "next," etc. are not intended to limit the order of the steps; these words are simply used to guide the reader through the description of the methods. Although process flow diagrams may describe the operations as a sequential process, many of the operations may be performed in parallel or concurrently. In addition, the order of the operations may be rearranged. A process may correspond to a method, a function, a procedure, a subroutine, a subprogram, etc. When a process corresponds to a function, its termination may correspond to a return of the function to the calling function or the main function.

The various illustrative logical blocks, modules, circuits, and algorithm steps described in connection with the embodiments disclosed here may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

Embodiments implemented in computer software may be implemented in software, firmware, middleware, microcode, hardware description languages, or any combination thereof. A code segment or machine-executable instructions may represent a procedure, a function, a subprogram, a program, a routine, a subroutine, a module, a software package, a class, or any combination of instructions, data structures, or program statements. A code segment may be coupled to and/or in communication with another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, etc.

The actual software code or specialized control hardware used to implement these systems and methods is not limiting of the invention. Thus, the operation and behavior of the systems and methods were described without reference to the specific software code being understood that software and control hardware can be designed to implement the systems and methods based on the description here.

When implemented in software, the functions may be stored as one or more instructions or code on a non-transitory computer-readable or processor-readable storage medium. The steps of a method or algorithm disclosed here may be embodied in a processor-executable software module which may reside on a computer-readable or processor-readable storage medium. A non-transitory computer-readable or processor-readable media includes both computer storage media and tangible storage media that facilitate transfer of a computer program from one place to another. A non-transitory processor-readable storage media may be any available media that may be accessed by a computer. By way of example, and not limitation, such non-transitory processor-readable media may comprise RAM, ROM, EEPROM, CD-ROM or other optical disk storage, magnetic disk storage or other magnetic storage devices, or any other tangible storage medium that may be used to store desired program code in the form of instructions or data structures and that may be accessed by a computer or processor. Disk and disc, as used here, include compact disc (CD), laser disc, optical disc, digital versatile disc (DVD), floppy disk, and Blu-ray disc where disks usually reproduce data magnetically, while discs reproduce data optically with lasers. Combinations of the above should also be included within the scope of computer-readable media. Additionally, the operations of a method or algorithm may reside as one or any combination or set of codes and/or instructions on a non-transitory processor-readable medium and/or computer-readable medium, which may be incorporated into a computer program product.

The previous description is of a preferred embodiment for implementing the invention, and the scope of the invention should not necessarily be limited by this description. The scope of the present invention is instead defined by the following claims.

## Claims

1. A method of automatically configuring a code reader, said method comprising.

   first imaging an object on which a machine-readable indicia is positioned to form a first image frame of the object;
   second imaging the object on which the machine-readable indicia is positioned to form a second image frame of the object;
   determining at least one motion vector of the object relative to the code reader between the first and second image frames;
   calculating a frame quality factor (Q) of the second image frame based on the at least one motion vector;
   automatically altering configuration of at least one of a decoder, image sensor, and illuminator based on the calculated frame quality factor (Q); and
   decoding the machine-readable indicia by the decoder.

2. The method according to claim 1, wherein automatically altering configuration of the sensor includes calculating gain (G) and exposure time (Texp) to reach a brightness level of the machine-readable indicia, wherein preferably calculating gain (G) and exposure time (Texp) includes executing automatic exposure control (AEC) and automatic gain control (AGC) functions.

3. The method according to any of the previous claims, wherein automatically altering configuration of the illuminator includes automatically selecting an illumination configuration based on the calculated frame quality factor (Q), the illumination configuration including (i) a first output duration of the illuminator if the calculated frame quality factor (Q) is at a first level and (ii) a second output duration of the illuminator that is longer than the first output duration if the calculated frame quality factor (Q) is at a second level below the first level.

4. The method according to any of the previous claims, wherein automatically altering configuration of the decoder includes:

    storing the frame quality factor (Q) for each machine-readable indicia being decoded by the decoder;
    determining whether the frame quality factor (Q) of the second image frame is lower than any other frame quality factor of any other image frame being decoded by the decoder, the decoder being formed of multiple decoders configured to decode machine-readable indicia captured in respective image frames; and
    in response to determining that the frame quality factor is lower than at least one other frame quality factor, replacing an image frame currently being decoded by the decoder with the highest frame quality factor (Q) with the second image frame.

5. The method according to any of the previous claims, further comprising:

    determining whether the calculated frame quality factor (Q) crosses a frame factor threshold level;
    in response to determining that the frame quality factor (Q) crosses the frame quality factor threshold level, stopping the decoder,
    otherwise, if the frame quality factor (Q) is determined to not have crossed the frame quality factor threshold level, continuing decoding the machine-readable indicia by the decoder.

6. A code reader, comprising:

    an image sensor configured to capture images of a scene;
    a non-transitory memory configured to store captured images;
    an illuminator configured to illuminate the scene;
    at least one processor in communication with the image sensor, non-transitory memory, and illuminator, and configured to:

        first image an object on which a machine-readable indicia is positioned to form a first image frame of the object;
        second image the object on which the machine-readable indicia is positioned to form a second image frame of the object;
        determine at least one motion vector of the object relative to the code reader between the first and second image frames;
        calculate a frame quality factor (Q) of the second image frame based on the at least one motion vector;
        automatically alter configuration of at least one of a decoder being executed by the at least one processor, image sensor, and the illuminator based on the calculated frame quality factor (Q); and
        decode the machine-readable indicia by the decoder.

7. The code reader according to claim 6, wherein the at least one processor, in automatically altering configuration of the sensor, is configured to calculate gain (G) and exposure time (Texp) to reach a brightness level of the machine-readable indicia.

8. The code reader according to any of claims 6-7, wherein the at least one processor, in automatically altering configuration of the illuminator, is configured to automatically modulate an illumination intensity based on the calculated frame quality factor (Q).

9. The code reader according to any of claims 6-8, wherein the at least one processor, in automatically altering configuration of the decoder, is configured to:

    store the frame quality factor (Q) for each machine-readable indicia being decoded by the decoder;
    determine whether the frame quality factor (Q) of the second image frame is lower than any other frame quality factor of any other image frame being decoded by the decoder, the decoder being formed of multiple decoders configured to decode machine-readable indicia captured in respective image frames;

in response to determining that the frame quality factor is lower than at least one other frame quality factor, replace an image frame currently being decoded by the decoder with the highest frame quality factor (Q) with the second image frame.

10. The code reader according to any of claims 6-9, wherein the at least one processor is further configured to:

define a region-of-interest (ROI) related to the machine-readable indicia; and
determine at least one motion vector within the region-of-interest.

11. The code reader according to any of claims 6-10, wherein the at least one processor is further configured to:

determine whether the calculated frame quality factor (Q) crosses a frame factor threshold level;
in response to determining that the frame quality factor (Q) crosses the frame quality factor threshold level, stop the decoder,
otherwise, if the frame quality factor (Q) is determined to not have crossed the frame quality factor threshold level, continue to decode the machine-readable indicia by the decoder.

12. The code reader according to any of claims 6-11, wherein the at least one processor, in determining at least one motion vector, is configured to receive an output inclusive of the at least one motion vector calculated by an image sensor used for performing the first and second imaging.

13. A method of operating a code reader, said method comprising:

operating the code reader in an idle phase by:

capturing a first image of a scene within a field-of-view of the code reader by an image sensor;
capturing a second image of the scene within the field-of-view of the code reader by the image sensor;
obtaining at least one motion vector using the first and second images, the at least one motion vector being indicative of motion of an object on which a machine-readable indicia is positioned;
analyzing the at least one motion vector to determine motion of the object;
determining, based on the motion of the object, whether an object is present; and

in response to determining that an object is not present, continue obtaining the at least one motion vector,
otherwise, in response to determining that the object is present, automatically transitioning the code reader from operating in the idle phase to operating in a decode phase to enable the code reader to decode the machine-readable indicia associated with the moving object.

14. The method according to claim 13, wherein operating in a decode phase includes:

turning the illuminator to an ON state from the OFF state;
capturing a third image by the image sensor;
capturing a fourth image by the image sensor;
obtaining at least one second motion vector indicative of movement of the object;
analyzing the at least one second motion vector to determine second motion of the object;
determining, based on the second motion of the object, whether the object is present; and
in response to determining that the object is present, continue obtaining second motion vectors until the object is determined not to be present,
otherwise, in response to determining that the object is no longer present, automatically transitioning the code reader back to the idle phase including transitioning the illuminator from the ON state to the OFF state.

15. The method according to claim 14, further comprising determining that the code reader is moving towards or away from the object if a plurality of the at least one motion vector or a plurality of the at least one second motion vector are respectively extending radially outward or radially inward from a center point of the object captured in the first and second images and/or third and fourth images the object,
wherein preferably in response to determining that the code reader is moving towards the object while operating in the idle phase, automatically transitioning the code reader from operating in the idle phase to operating in a decode phase to enable the code reader to decode the machine-readable indicia associated with the moving object.

100

110

102

104

106

108

FIG. 1

200

206n

(x2,y2)

206a

208

(dx,dy )

(x1,y1)

202

204n

204a

dx/dy

210

FIG. 2

EP 4 738 187 A1

18

**FIG. 3**

**FIG. 4**

EP 4 738 187 A1

**500**

Short flash
(high Q)

Long semi continuous
(low Q)

502a

502b

Light Intensity

Time

**FIG. 5**

**600a**

Decoders

Time T1

| 602a | ID=1 Q=30 |
| 602b | ID=2 Q=50 |
| 602c | ID=3 Q=60 |
| 602d | Free |

604a
ID=4
Q=40

**FIG. 6A**

**600b**

Decoders

Time T2

| 602a | ID=1 Q=30 |
| 602b | ID=2 Q=50 |
| 602c | ID=3 Q=60 |
| 602d | ID=4 Q=40 |

604b
ID=5
Q=10

**FIG. 6B**

700

FIG. 7

800

FIG. 8

21

**900**

902

904a

Object moving toward the scanner

**FIG. 9A**

**900**

902

904b

Object moving away from the scanner

**FIG. 9B**

1000a

Enlargement – target coming closer

(dx,dy)

1004n

1004a

1002a

1000

1002

1234 5670

Shrinking – target going farther

(dx,dy)

1006n

1006a

1002b    **FIG. 10**

1000b

EP 4 738 187 A1

FIG. 11A

FIG. 11B

FIG.12

1300a    1304

AIM ON BACKGROUND (BASELINE)

1302a

**FIG. 13A**

1300b    1306

AIM ON PRESENTED OBJECT
Motion Vectors

1308    1302b

1310

**FIG. 13B**

EP 4 738 187 A1

1402    1402    1402

1400a    1400b    1400c

Background Pattern
(baseline) - t0

1412a

1410    1412b

1408a

1404

1408n    **FIG. 14A**

Presented Object, masking pattern
(coming from top right) - t1

1406

1414

1404

**FIG. 14B**

Presented Object, masking pattern
(coming from top right) - t2

1406

1414

1404

**FIG. 14C**

**EUROPEAN SEARCH REPORT**

Application Number

EP 25 20 0091

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2019/073504 A1 (ASHBY MARK [US] ET AL) 7 March 2019 (2019-03-07) | 1-4, 6-10, 12-15 | INV. G06K7/14 G06K7/10 |
| A | * paragraph [0002] * <br> * paragraph [0161] * <br> * paragraph [0191] - paragraph [0200] * <br> * figure 10 * | 5,11 | |
| Y | US 2021/127131 A1 (LIM JEONG-YEON [KR] ET AL) 29 April 2021 (2021-04-29) <br><br> * paragraph [0009] * <br> * paragraph [0175] - paragraph [0180] * <br> * claim 1 * <br> * figure 11 * | 1-4, 6-10, 12-15 | |
| A | WO 2023/055571 A1 (ZEBRA TECH CORP [US]) 6 April 2023 (2023-04-06) <br> * paragraph [0073] * <br> * paragraph [0082] - paragraph [0084] * <br> * figures 5,7 * | 1-15 | TECHNICAL FIELDS SEARCHED (IPC) |
| A | US 2012/018518 A1 (STROEM JACOB [SE] ET AL) 26 January 2012 (2012-01-26) <br> * claim 1 * | 1-15 | G06K |

The present search report has been drawn up for all claims

| Place of search | Date of completion of the search | Examiner |
|---|---|---|
| Munich | 27 March 2026 | Bhalodia, Anil |

EPO FORM 1503 03.82 (P04C01)

## ANNEX TO THE EUROPEAN SEARCH REPORT
## ON EUROPEAN PATENT APPLICATION NO.

EP 25 20 0091

This annex lists the patent family members relating to the patent documents cited in the above-mentioned European search report.
The members are as contained in the European Patent Office EDP file on
The European Patent Office is in no way liable for these particulars which are merely given for the purpose of information.

27-03-2026

| Patent document cited in search report | | Publication date | Patent family member(s) | | Publication date |
|---|---|---|---|---|---|
| US 2019073504 | A1 | 07-03-2019 | US | 9286502 B1 | 15-03-2016 |
| | | | US | 9367726 B1 | 14-06-2016 |
| | | | US | 2016321482 A1 | 03-11-2016 |
| | | | US | 2016321487 A1 | 03-11-2016 |
| | | | US | 2017344775 A1 | 30-11-2017 |
| | | | US | 2019073504 A1 | 07-03-2019 |
| | | | US | 2019087618 A1 | 21-03-2019 |
| | | | US | 2021174041 A1 | 10-06-2021 |
| US 2021127131 | A1 | 29-04-2021 | CN | 109845258 A | 04-06-2019 |
| | | | KR | 20180043151 A | 27-04-2018 |
| | | | KR | 20210131987 A | 03-11-2021 |
| | | | KR | 20210134554 A | 10-11-2021 |
| | | | US | 2019320195 A1 | 17-10-2019 |
| | | | US | 2021127131 A1 | 29-04-2021 |
| WO 2023055571 | A1 | 06-04-2023 | BE | 1029780 A1 | 14-04-2023 |
| | | | US | 2024403583 A1 | 05-12-2024 |
| | | | WO | 2023055571 A1 | 06-04-2023 |
| US 2012018518 | A1 | 26-01-2012 | EP | 2415015 A1 | 08-02-2012 |
| | | | US | 2012018518 A1 | 26-01-2012 |
| | | | WO | 2010114449 A1 | 07-10-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10817685 B